# EUROPEAN PATENT SPECIFICATION

(11) **EP 0 679 431 B1**
(45) Date of publication and mention of the grant of the patent: **01.07.1998**
(21) Application number: 95201093.2
(22) Date of filing: 27.04.1995
(51) Int. Cl.: B01J 8/04, B01J 8/00, C10G 49/00

(54) **Reactor and use thereof**
Reaktor und seine Anwendung
Réacteur et son application

(30) Priority: 29.04.1994 EP 94201201
(43) Date of publication of application: 02.11.1995
(73) Proprietor: SHELL INTERNATIONALE RESEARCH MAATSCHAPPIJ B.V., 2596 HR Den Haag (NL)
(72) Inventor: Deelen, Willem J., NL-2596 HR Den Haag (NL); van Els, Augustinus C.C., NL-2596 HR Den Haag (NL); van Vliet, Willem, NL-2596 HR Den Haag (NL)

(56) References cited:
- EP-A- 0 099 800
- EP-A- 0 562 913
- US-A- 5 028 314

## Description

The present invention relates to a reactor and to its use. More specifically, the present invention relates to a reactor which is particularly suitable for (hydro)processing of hydrocarbon oils and to the use of such reactor.

Reactors used in the hydroprocessing of hydrocarbon oils usually contain one or more horizontally fixed support layers on which catalyst beds can rest. When the catalyst activity is no longer satisfactory, the catalyst needs to be replaced by fresh or regenerated catalyst. Since hydroprocessing of hydrocarbon oil generally results in the formation of coke which causes the catalyst particles to agglomerate forming one solid mass, removal of the used catalyst usually requires considerable effort. There are known various ways for removing caked catalyst. One method is to provide the support layers with openings through which the catalyst, after having been cut into smaller pieces, can be removed. Reloading the catalyst bed(s) with fresh or regenerated catalyst can subsequently take place via the same openings.

In US-A-5,028,314 a hydrodesulphurization method is disclosed, wherein metal-contaminated heavy hydrocarbon oils are desulphurized in the presence of hydrogen using fixed catalyst beds. These catalyst beds are disposed in a reactor vessel in a series of two or more consecutive beds, which are supported by substantially horizontal support layers in the reactor. The catalyst is periodically removed from the reactor by hydro drilling a central opening through the catalyst beds along an axis extending vertically along the axis of the reactor vessel, hydrocutting the caked catalyst beds into smaller pieces and removing these pieces via an opening in the lower part of the reactor. The reactor vessel is subsequently recharged with fresh catalyst. In order to enable the removal of the small pieces of used catalyst, the support layers upon which the catalyst beds rest, contain a hole, preferably centrally located, of a certain diameter.

A disadvantage of the reactor described in US-A-5,028,314 is that the openings in the support layers inevitably cause a bypass of liquid and gas from one bed to the consecutive bed in downward direction during normal operation. Such bypass of liquid and gas from one bed to another during operation is undesired, since it makes control of the process considerably more difficult which in return has a negative impact on the quality of the product finally obtained. Furthermore, the presence of openings in the support layers has a negative impact on the settling of the catalyst bed resting upon it and accordingly on the homogeneity of the distribution of catalyst particles over the catalyst bed. Particularly in the area around the openings, the settling will not be homogeneous.

In EP-A-0,562,913 a reactor is disclosed comprising an inlet, an outlet and thereinbetween successive beds of solid material, whereby each pair of successive beds is separated by a layer which also supports the bed resting upon it. Each support layer is provided with a tubular shaft connecting the beds on each side of it. Each tubular shaft contains closure means which can be controlled remotely. Such remote control involves the use of mechanical means, such as a chain or a bridle connected to a movable closing plate located inside the tubular shaft, which chain or bridle must be pulled in order to move said plate, thus accomplishing an opening within the tubular shaft. The closing plate is located within the tubular shaft at some distance from the top of said shaft. The reactor is stated to be suitable for use in the hydrotreatment of petroleum fractions, particularly when using beds of different catalysts within one reactor. The construction of the reactor disclosed in principle makes it possible to unload the reactor "bed-by-bed" thus avoiding that catalyst particles of different beds are mixed upon unloading of the reactor.

A disadvantage of the reactor disclosed in EP-A-0,562,913 is caused by the fact that the closing plates are located at some distance from the top of the tubular shafts connecting two consecutive beds. The location of said plates namely causes the presence of catalyst particles in the tubular shaft directly on top of the closing plate. Given the fact that during hydrotreatment of heavy hydrocarbon oils caking of the catalyst particles nearly always occurs, it will be apparent that such caking within the tubular shaft will block said shaft and probably will also seriously hinder the control of the closing plate. Furthermore, the use of mechanical means for operating the closure plates inside the tubular shafts is undesired from an operating point of view, since the coke formed during hydrotreatment of hydrocarbon oils will stick to the closure means inside the tubular shaft, thus making it very difficult, if not impossible, to open said closure means. Also from a cost perspective, the reactor disclosed in EP-A-0,562,913 is undesired, as each tubular shaft within the reactor needs its own means for controlling the closing plate and must be operated separately.

The present invention aims to overcome the disadvantages of the prior art systems mentioned above. Furthermore, it is an object of the present invention to provide a reactor which can be operated and unloaded fairly easy and at relatively low cost and which can be suitably applied in the hydrotreatment of hydrocarbon oils.

Accordingly, the present invention relates to a reactor comprising a normally vertically extending vessel containing
(a) at least one inlet for gas and/or liquid,
(b) at least one outlet for reactor effluent, and
(c) at least one bed of solid material,
   wherein each bed of solid material rests upon a support layer which is horizontally fixed in the vessel, said support layer comprising at least one opening closed by a breakplate during normal operation.

The expression "normal operation" refers to the situation wherein a feed is entering the reactor at the inlet(s) and is treated and/or converted in the desired way during contact with the solid material under conditions known to be appropriate for the particular treatment and/or conversion reaction(s) occurring in the bed of solid material, after which the treated and/or converted feed leaves the reactor at its outlet(s).

In a preferred embodiment the reactor contains at least two consecutive beds of solid material.

This reactor has the advantage that during normal operation no bypass of gas and liquid through the openings in the support layers to the consecutive bed occurs, because during normal operation the breakplate fully closes the openings in the support layers. On the other hand, if operation is stopped because the catalyst needs to be replaced, the caked catalyst can be removed fairly easy. Via known techniques, such as hydro jetting or drilling, the caked catalyst can be cut into small pieces, e.g. as described in the before-mentioned US-A-5,028,314. Subsequently, the breakplates are broken, by applying a sufficiently large pressure differential across these breakplates, for instance by means of the water jet or drill also used for cutting the caked catalyst into pieces. As a result, the openings in the support layers become free, thus enabling the subsequent removal of the catalyst pieces from the reactor through these openings.

A further advantage of the reactor according to the present invention is its relatively cheap way of operation, whereby the use of mechanical means for controlling the closure means for the opening in the support layer is avoided. Furthermore, no caking of catalyst particles in the opening in the support layer can occur, because the breakplate is located on top of the opening thereby fully covering it.

Breaking of the breakplate in principle can be achieved by any method known in the art, wherein the pressure differential across the breakplate can be made sufficiently high to cause breaking of the breakplate. It will be clear that the pressure differential to be generated for breaking the breakplate must be higher than the pressure differential during normal operation. For hydrotreatment processes, the pressure differential across the breakplate during normal operation generally lies within the range from 0.1 to 50 bar, more suitably 0.1 to 20 bar and most suitably 0.5 to 10 bar. Absolute pressures applied in hydrotreatment processes are usually within the range from 5 to 300 bar, suitably 50 to 200 bar.

Raising the pressure differential across the breakplate to a value sufficiently high to cause breaking of said plate can be done in various ways. For instance, by applying a mechanical force onto the breakplate, such as by pushing or hitting the plate. Mechanical drilling and hydro jetting are also suitable techniques, while the use of CO₂ cartridges or explosives may also be considered.

The reactor vessel according to the present invention contains at least one bed -preferably at least two consecutive beds- of solid material, each bed resting upon a support layer. The construction of suitable support layers (also commonly referred to as "internals") is known in the art. For instance, commonly applied support layers or internals comprise one or more permeable plates supported by support beams, whereby the catalyst bed rests upon the said permeable plates. Gaseous and liquid products formed in the reactions occurring in the catalyst bed are passed through the permeable plates to the subsequent catalyst bed or reactor outlet. The internal may comprise additional means, such as injection nozzles, cooling or heating means and gas swirlers. Gaseous and/or liquid products formed can also be removed from one catalyst bed and introduced again into the reactor above the subsequent catalyst bed or recovered as a product.

In principle, the number of consecutive beds is immaterial to the application of the concept of the present invention. The maximum number of consecutive beds is therefore determined by practical and economical considerations.

The openings in the support layers are suitably formed by shafts vertically extending through the support layer. Said shafts may have any geometrical shape as long as they can be adequately closed by a breaking plate. Examples include cylindrical, rectangular or conical shafts.

The number of openings in the support layer is not particularly critical and may vary from 1 to about 40, depending on the internal diameter of the reactor vessel and the diameter of each opening. Preferably, the number of openings is in the range of from 1 to 10, more preferably 1 to 6. The diameter of each opening should be sufficiently large to allow the catalyst pieces formed by hydro jet cutting or cutting with a normal drill to pass said opening. Suitable diameters then, may vary from as small as 5 cm to as large as 1 m. In view of the size and weight of the breakplate to be used, it is preferred to use openings having a diameter in the range of from 15 to 75 cm.

The location of the openings in the support layer is not particularly critical. It is however preferred that the openings are located in such manner that it is possible to break the breakplates via the reactor inlet(s), for example by using hydro jetting or drilling. Therefore, particularly when two or more catalyst beds are present, it is preferred that at least one reactor inlet and the openings in the consecutive support layers are located along the same vertical axis. This, namely, facilitates the unloading of the reactor, particularly when using hydrojetting or drilling. The reactor outlet preferably is also located along the same vertical axis as the inlet and the openings in the successive support layers, but this is of less importance. Self-evidently, the reactor may contain more than one inlet and/or outlet suitable for allowing the use of means for breaking the breakplates. Accordingly, if the reactor contains more than one inlet, it is preferred that the number of openings in each support layer is equal to the number of reactor inlets. However, the present invention is not restricted to such configuration.

The breakplates must be made of a material which can stand the normal operating conditions in hydroprocessing of hydrocarbon oils, so that the breakplates do not break during normal operation. Accordingly, suitable materials include ceramic materials, such as silica, alumina or silica-alumina, since these materials are relatively cheap and commonly available while exhibiting the required behaviour. Other suitable materials include metals, particularly steel, and metal alloys, hardened clays, cement-like material or brick-like material. Of the ceramic materials, bubbled alumina is most preferred. Bubbled alumina can be obtained by blowing an inert gas, such as air or nitrogen, into heated alumina.

In another preferred embodiment of the present invention, the reactor described above is a trickle flow reactor. In terms of the reactor according to the present invention, this implies that above the upper bed means for distributing gas and/or liquid are present, which means are known in the art. Suitably, such means for distributing gas and/or liquid are also present in at least the upper support layer, and more suitably in all subsequent support layers as well.

The solid material constituting the beds of solid material in principle can be any material having a catalytic activity for the reactions taking place in the reactor. Since the reactor according to the present invention is particularly suitable in the hydrotreatment of (residual) hydrocarbon oils, the solid material preferably is formed by catalyst particles for hydrotreating hydrocarbon oils.

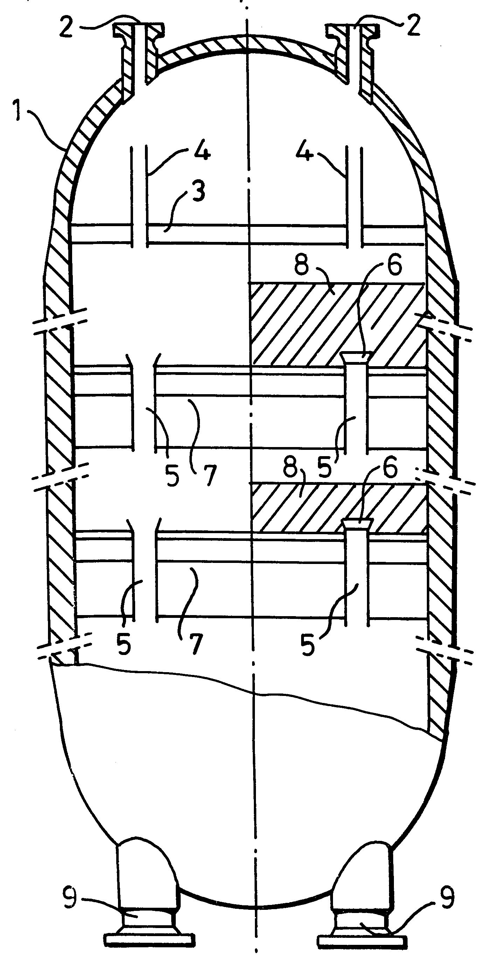

Figure 1 depicts an example of a reactor according to the present invention. The left half of the figure shows an empty or unloaded reactor while the right half shows a loaded reactor suitable for operation. The reactor (1) comprises reactor inlets (2), reactor outlets (9) and pipes (4) supported on a layer (3) which may contain means for distributing the incoming liquid over the subsequent catalyst bed. The pipes (4) can be used for charging fresh catalyst. The reactor (1) furthermore comprises support layers (7) having openings (5), which are closed during operation by breakplates (6). A catalyst bed (8) rests upon the support layer (7) during operation and these support layers (7) may also contain means for distributing gas and/or liquid.

The use of the reactor as described above is also an aspect of the present invention. Accordingly, the present invention also relates to the use of said reactor, whereby
(a) during normal operation all openings in the support layer(s) are closed by a breakplate,
(b) between normal operation and solids removal the caked catalyst is cut into smaller pieces and a pressure differential is subsequently applied across each breakplate, which is sufficiently high to cause breaking, and
(c) the pieces of solid material are removed from the reactor via the openings obtained in step (b).

As already mentioned above, drilling and hydro jetting are very suitable means for breaking the breakplates. Breaking the breakplate by generating the required pressure differential across it via a hydro jet through the reactor inlet(s) is, however, the most preferred option. The method described in US-A-5,028,314 for instance is very useful in this connection.

The reactor according to the present invention is preferably used in the hydrotreatment of hydrocarbon oils, suitably residual hydrocarbon oils, whereby the reactor is most suitably applied in the hydrodesulphurization, hydrodemetallisation or hydrocracking of such oils.

After the reactor has been unloaded completely, it can easily be recharged with fresh catalyst via the reactor inlet(s). By charging the inlet(s) with fresh catalyst, the reactor is filled bed-by-bed starting with the lowest bed and ending with the upper bed. Each time a bed is filled, new breakplates are first placed onto the openings of the support layer upon which the bed of solid particles will rest, followed by filling the bed with fresh catalyst. Once the bed has been filled, the openings of the next support layer are covered by breakplates and the bed is filled. This procedure continues until all beds have been filled.

The usefulness of bubbled alumina as material for construing a breakplate is illustrated by the following examples.

### Example 1

Pressure was applied onto a block of bubbled alumina by a hydro jet. A hole could be drilled in the bubbled alumina block by applying a water pressure of 600 bar onto it. At a water pressure level of 800 bar the block broke up.

### Example 2

The purpose of this example was to establish any possible effect of reactor conditions on mechanical properties of the breakplate material.

One bar of bubbled alumina having a size of 13*13*113 mm (width*height*length), a mass of 25 g and a density of 1.4 g/cm³ was exposed to actual hydrodesulphurisation reactor conditions (150 bar hydrogen pressure, H₂S, long residue feed) for one week in a bench scale reactor. The "dirty" bar was subsequently removed from the reactor.

The modulus of elasticity and the breaking strength of the dirty bar as well as of a corresponding clean bar were determined. The results are listed in Table 1.

**Table 1**

| Influence of reactor conditions | | |
|---|---|---|
| | Modulus of Elasticity (N) | Breaking Strength (MPa) |
| Dirty bar | 64 | 5.2 |
| Clean bar | 56 | 4.5 |

From the results listed in Table 1 it can be concluded that the mechanical properties of the bubbled alumina are not deteriorated by the reactor conditions.

From the results of Examples 1 and 2 it can therefore be concluded that bubbled alumina is a suitable material for the breakplates to be applied in the reactor according to the present invention.

## Claims

1. Reactor comprising a normally vertically extending vessel containing
(a) at least one inlet for gas and/or liquid,
(b) at least one outlet for reactor effluent, and
(c) at least one bed of solid material,
wherein each bed of solid material rests upon a support layer which is horizontally fixed in the vessel, said support layer comprising at least one opening closed by a breakplate during normal operation.

2. Reactor according to claim 1 comprising at least two consecutive beds of solid material.

3. Reactor according to claim 1 or 2, wherein the opening is formed by a shaft vertically extending through the support layer.

4. Reactor according to any one of the preceding claims, wherein at least one reactor inlet and the openings in consecutive support layers, are located along the same vertical axis.

5. Reactor according to any one of the preceding claims, wherein the breakplate is made of ceramic material.

6. Reactor according to claim 5, wherein the ceramic material is bubbled alumina.

7. Reactor according to any one of the preceding claims, wherein above the upper bed means for distributing gas and/or liquid are present.

8. Reactor according according to claim 7, wherein at least the upper support layer also comprises means for distributing gas and/or liquid.

9. Reactor according to any one of the preceding claims, wherein the solid material is formed by catalyst particles for hydrotreating residual hydrocarbon oils.

10. Use of a reactor as claimed in any one of claims 1 to 9, in which the solid material comprises catalyst particles which become caked during normal operation of the reactor, whereby
(a) during normal operation all openings in the support layer(s) are closed by a breakplate,
(b) between normal operation and solids removal the caked catalyst is cut into smaller pieces and a pressure differential is subsequently applied across each breakplate, which is sufficiently high to cause breaking, and
(c) the pieces of solid material are removed from the reactor via the openings obtained in step (b).

11. Use according to claim 10, wherein the breakplate is broken by generating the required pressure differential across it via a hydro jet through the reactor inlet(s).

12. Use according to claim 10 or 11 in hydrotreatment of hydrocarbon oils.

13. Use according to claim 12, wherein the hydrotreatment is hydrodesulphurization.

14. Use according to claim 12, wherein the hydrotreatment is hydrometallisation.

15. Use according to claim 12, wherein the hydrotreatment is hydrocracking.

## Patentansprüche

1. Reaktor, mit einem normalerweise sich vertikal erstreckenden Gefäß, das
(a) zumindest einen Einlaß für Gas und/oder Flüssigkeit,
(b) zumindest einen Auslaß für Reaktorablauf, und
(c) zumindest ein Bett aus festem Material enthält,
wobei jedes Bett aus festem Material auf einer Stützschicht ruht, die im Gefäß horizontal festgelegt ist, welche Stützschicht zumindest eine im normalen Betrieb durch eine Bruchplatte verschlossene Öffnung aufweist.

2. Reaktor nach Anspruch 1, mit zumindest zwei aufeinanderfolgenden Betten aus festem Material.

3. Reaktor nach Anspruch 1 oder 2, bei welchem die Öffnung durch einen Stutzen gebildet wird, der sich vertikal durch die Stützschicht hindurcherstreckt.

4. Reaktor nach einem der vorhergehenden Ansprüche, bei welchem zumindest ein Reaktoreinlaß und die Öffnungen in den darauffolgenden Stützschichten in derselben Vertikalachse liegen.

5. Reaktor nach einem der vorhergehenden Ansprüche, bei welcher die Bruchplatte aus keramischem Material gefertigt ist.

6. Reaktor nach Anspruch 5, bei welcher das keramische Material geblähtes Aluminiumoxid ist.

7. Reaktor nach einem der vorhergehenden Ansprüche, bei welcher oberhalb des oberen Bettes Mittel zum Verteilen von Gas und/oder Flüssigkeit vorhanden sind.

8. Reaktor nach Anspruch 7, bei welchem zumindest die obere Stützschicht auch Mittel zum Verteilen von Gas und/oder Flüssigkeit aufweist.

9. Reaktor nach einem der vorhergehenden Ansprüche, bei welchem das feste Material aus Katalysatorpartikeln zum Hydrobehandeln von Kohlenwasserstoffrückstandsölen gebildet ist.

10. Verwendung eines Reaktors nach einem der Ansprüche 1 bis 9, bei welcher das feste Material Katalysatorpartikel umfaßt, die während des normalen Betriebes des Reaktors zusammengebacken werden, wobei
(a) im normalen Betrieb alle Öffnungen in der/den Stützschicht(en) durch eine Bruchplatte verschlossen sind,
(b) zwischen dem normalen Betrieb und der Feststoffentfernung der zusammengebackene Katalysator in kleinere Stücke geschnitten und anschließend eine Druckdifferenz über jede Bruchplatte aufgebracht wird, welche ausreichend hoch ist, um ihr Zerbrechen zu bewirken, und
(c) die Stücke aus festem Material aus dem Reaktor über die in Schritt (b) erhaltenen Öffnungen entfernt werden.

11. Verwendung nach Anspruch 10, bei welcher die Bruchplatte durch Erzeugen der erforderlichen Druckdifferenz mit Hilfe eines Wasserstrahles durch den/die Reaktoreinlässe aufgebrochen wird.

12. Verwendung nach Anspruch 10 oder 11 bei der Hydrobehandlung von Kohlenwasserstoffölen.

13. Verwendung nach Anspruch 12, bei welcher die Hydrobehandlung eine Hydroentschwefelung ist.

14. Verwendung nach Anspruch 12, bei welcher die Hydrobehandlung eine Hydroentmetallisierung ist.

15. Verwendung nach Anspruch 12, bei welcher die Hydrobehandlung ein Hydrocracken ist.

## Revendications

1. Réacteur qui comprend un récipient s'étendant normalement verticalement et qui contient
(a) au moins une entrée pour un gaz et/ou un liquide,
(b) au moins une sortie pour l'effluent du réacteur et
(c) au moins un lit de matière solide,
conformément auquel chaque lit de matière solide repose sur une couche de support qui est horizontalement fixée dans le récipient, ladite couche de support comprenant au moins une ouverture fermée par une plaque de rupture au cours du fonctionnement normal.

2. Réacteur suivant la revendication 1, caractérisé en ce qu'il comprend au moins deux lits successifs de matière solide.

3. Procédé suivant la revendication 1 ou 2, caractérisé en ce que l'ouverture est formée par un arbre s'étendant verticalement à travers la couche de support.

4. Réacteur suivant l'une quelconque des revendications précédentes, caractérisé en ce qu'au moins une entrée du réacteur et les ouvertures dans des couches de support successives se situent le long du même axe vertical.

5. Réacteur suivant l'une quelconque des revendications précédentes, caractérisé en ce que la plaque de rupture est réalisée en un matériau céramique.

6. Réacteur suivant la revendication 5, caractérisé en ce que le matériau céramique est de l'alumine à barbotage.

7. Réacteur suivant l'une quelconque des revendications précédentes, caractérisé en ce que, au dessus du lit supérieur, sont présents des moyens pour distribuer un gaz et/ou un liquide.

8. Réacteur suivant la revendication 7, caractérisé en ce qu'au moins la couche de support supérieure comprend également des moyens pour distribuer un gaz et/ou un liquide.

9. Réacteur suivant l'une quelconque des revendications précédentes, caractérisé en ce que la matière solide est formée par des particules de catalyseur, pour l'hydrotraitement d'huiles hydrocarbonées résiduelles.

10. Utilisation d'un réacteur suivant l'une quelconque des revendications 1 à 9, où la matière solide est constituée de particules de catalyseur qui s'agglomèrent au cours du fonctionnement normal du réacteur, caractérisée en ce que
(a) au cours du fonctionnement normal, toutes les ouvertures de la ou des couches de support sont fermées par une plaque de rupture,
(b) entre le fonctionnement normal et l'enlèvement de solides, le catalyseur pris en gâteau est découpé en petits fragments et une différentielle de pression est ensuite appliquée à travers chaque plaque de rupture, laquelle différentielle de pression est suffisamment élevée pour provoquer la rupture et
(c) les fragments de matières solides sont enlevés du réacteur par les ouvertures obtenues au stade (b).

11. Utilisation suivant la revendication 10, caractérisée en ce que la plaque de rupture est rompue en générant la différentielle de pression nécessaire à travers celle-ci, à l'aide d'un hydro jet à travers la ou les entrées du réacteur.

12. Utilisation suivant la revendication 10 ou 11, en vue de l'hydrotraitement d'huiles hydrocarbonées.

13. Utilisation suivant la revendication 12, caractérisée en ce que l'hydrotraitement est l'hydrodésulfuration.

14. Utilisation suivant la revendication 12, caractérisée en ce que l'hydrotraitement est l'hydrodémétallation.

15. Utilisation suivant la revendication 12, caractérisée en ce que l'hydrotraitement est l'hydrocraquage.
